# EUROPÄISCHE PATENTSCHRIFT

(11) **EP 2 440 393 B1**
(45) Veröffentlichungstag und Bekanntmachung des Hinweises auf die Patenterteilung: **14.08.2019**
(21) Anmeldenummer: 10722705.0
(22) Anmeldetag: 04.06.2010
(51) Int. Cl.: B29C 70/24, D04B 1/00, D04B 1/22

(54) **VERFAHREN ZUR HERSTELLUNG EINES GESTRICKS, DAS ZUMINDEST BEREICHSWEISE SCHLAUCH- ODER HOHLKÖRPERFÖRMIG AUSGEBILDET IST**
METHOD FOR THE PRODUCTION OF TUBULAR OR HOLLOW-BODY-SHAPED KNITTED FABRICS
PROCÉDÉ DE PRODUCTION DES TRICOTS RÉALISÉS EN FORME DE CORPS TUBULAIRES OU DE CORPS CREUX

(30) Priorität: 10.06.2009 DE 102009026894
(43) Veröffentlichungstag der Anmeldung: 18.04.2012
(73) Patentinhaber: Technische Universität Dresden, 01069 Dresden (DE)
(72) Erfinder: TRÜMPER, Wolfgang, 01219 Dresden (DE); CHERIF, Chokri, 01219 Dresden (DE); DIESTEL, Olaf, 01187 Dresden (DE)
(74) Vertreter: Sperling, Thomas
(86) Internationale Anmeldenummer: PCT/EP2010/057832
(87) Internationale Veröffentlichungsnummer: WO 2010/142608

(56) Entgegenhaltungen:
- EP-A2- 0 243 147
- WO-A1-91/15620
- WO-A1-97/21860
- DE-A1- 19 605 002
- STOLL T: "LES TEXTILES TECHNIQUES POINTS FORTS DU RECTILIGNE" FILIERE MAILLE, INDUSTRIE TEXTILE, PARIS, FR, Nr. 30, 1. November 1994 (1994-11-01), XP000477803 ISSN: 1146-0733

## Beschreibung

Die Erfindung betrifft ein Verfahren zur Herstellung von Gestricken, die zumindest bereichsweise schlauch- oder hohlkörperförmig ausgebildet sind und welche zumindest bereichsweise mit mindestens biaxial gestreckt angeordneten Verstärkungsfäden versehen sind.

Zur Verstärkung vorzugsweise zylindrischer Bauteile mit neuartigen Verstärkungsmaterialien werden textile Strukturen mit belastungsgerecht angeordneten Verstärkungsfäden benötigt. Dazu sind Verstärkungsstrukturen und Verfahren zu ihrer Herstellung notwendig, die gleichzeitig eine Verstärkung der Bauteile in axialer und tangentialer Richtung ermöglichen. Insbesondere in tangentialer Verstärkungsrichtung ist es dabei erforderlich, umlaufende, nicht unterbrochene Verstärkungsfäden einbringen zu können. Weiterhin ist für die optimale Ausnutzung des Verstärkungspotentials eine gestreckte Anordnung der Verstärkungsfäden unerlässlich. Ein vorzeitiges Bauteilversagen aufgrund von Delaminationen wird durch das Fixieren der Verstärkungslagen gegeneinander durch bei der Herstellung in Dickenrichtung angeordnetes Verstärkungsfadenmaterial verhindert.

Aus den steigenden Anforderungen an die äußere Form der zu verstärkenden Bauteile ergibt sich weiterhin die Notwendigkeit, sehr flexible Fertigungsverfahren einzusetzen, um so zum Beispiel schlauchförmige Verstärkungsstrukturen mit unterschiedlichen, über die Schlauchbeziehungsweise Bauteillänge konstanten Durchmessern, aber auch mit sich über die Schlauch- beziehungsweise Bauteillänge ändernden Durchmessern ohne aufwändige Maschinenumrüstungen fertigen zu können. Daneben sind aber auch vollständige textile Verstärkungsstrukturen, unter anderem zur Verstärkung von Abzweigungen, zum Beispiel in Y- oder T-Form, gefordert, die zum Beispiel im konstruktiven Holzbau oder im Rohrleitungsbau eingesetzt werden sollen.

Bei einer Veränderung der Durchmesser von schlauch- beziehungsweise hohlkörperförmigen Verstärkungsstrukturen sind bei gleichbleibender Fadendichte in axialer Richtung bei einer Verringerung des Durchmessers weniger und bei einer Vergrößerung entsprechend mehr Verstärkungsfäden in die textile Struktur einzubinden. Eine Verringerung des Aufwands zur Nachbearbeitung sowie die Fertigung einer im Randbereich qualitativ ansprechenden textilen Struktur ohne herausstehende Fadenenden werden durch die Einbindung aller Verstärkungsfäden in die Struktur erreicht. Dazu ist es unter anderem sehr vorteilhaft, unter Beibehaltung der axialen Ausrichtung der Verstärkungsfäden eine Umordnung der Fäden am Umfang vornehmen zu können.

Zur Befestigung von faserverstärkten Bauteilen, zur Verbindung mit anderen faserverstärkten Bauteilen oder zur Realisierung von Krafteinleitungsstellen sind an den entsprechenden Stellen Durchbrüche zur Einbringung von Elementen für die Befestigung beziehungsweise Krafteinleitung notwendig. Diese Durchbrüche können im Anschluss an die Fertigung des Bauteils eingebracht werden, zum Beispiel durch Bohren, Fräsen oder ähnliche nachträgliche Bearbeitungsmethoden. Dabei wird allerdings die Verstärkungsstruktur lokal zerstört. Das textile Fertigungsverfahren sollte daher die lokale Anordnung der Verstärkungsfäden gegebenenfalls auch in der Verstärkungsstruktur derart ermöglichen, dass die Durchbrüche während der Herstellung durch Umordnen der Verstärkungsfäden eingebracht werden. Die Einbringung der Befestigungs- beziehungsweise Krafteinleitungselemente kann dabei auch während der Herstellung der textilen Struktur erfolgen.

Textile Schlauch- oder Hohlstrukturen können als jeweils gegenüberliegende flächige Strukturen betrachtet werden, die an beiden Außenkanten miteinander verbunden sind. In die Flächen sind, wie bereits genannt, Verstärkungsfäden in tangentialer und axialer Richtung eingearbeitet. Für die gezielte Einstellung der Bauteileigenschaften entsprechend den Belastungen beziehungsweise Anforderungen ist es notwendig, die textile Verstärkungsstruktur in den einzelnen Flächen gezielt anzupassen, sowohl lokal innerhalb der Verstärkungsstruktur als auch global bei der Fertigung unterschiedlicher textiler Strukturen. Bei der Herstellung der textilen Schlauch- und Hohlstrukturen in einer Fertigungsstufe ist dies zum einen durch den Einsatz hinsichtlich Material oder Feinheit verschiedener Verstärkungsfäden in den Flächen möglich, aber zum anderen durch die Umordnung einzelner Verstärkungsfäden auch nur lokal zum jeweils stärker belasteten Bereich der Schlauch- oder Hohlstruktur.

Ein weiteres Problem besteht für ebene, biaxial aufgebaute Verstärkungsstrukturen in der Ausbildung geeigneter Möglichkeiten zur Integration zusätzlicher Elemente, zum Beispiel für die Befestigung an (Verbindung mit) anderen Bauteilen oder für die Krafteinleitung in die Bauteil- und damit in die Verstärkungsstruktur. Sehr hilfreich dafür ist die Integration von unter anderem Taschen oder Laschen - mit jeweils mindestens biaxialer Verstärkung aller Teilflächen der Tasche beziehungsweise Lasche - in die ebenen, biaxial aufgebauten Verstärkungsstrukturen.

Rundwebverfahren und Verfahren zur Herstellung von Auffaltgeweben (zum Beispiel shape3-Verfahren: www.shape3.com) ermöglichen die Herstellung schlauchförmiger Textilien in Form von Geweben aus in tangentialer und axialer Richtung angeordneten Verstärkungsfäden. Beim Rundweben sind Schlauchstrukturen mit konstanten Durchmessern realisierbar. Beim shape3-Verfahren kann durch den Einsatz spezieller V-förmiger Webblätter die Ausnutzung der Bindungstechnik und des Schussfadeneintrags mittels Spulenschützen der Durchmesser innerhalb einer Schlauchstruktur verändert werden. Weiterhin sind durch den Ersatz eines Webschützen Schlauchstrukturen in Y-Form, wie sie bei Verzweigungen benötigt werden, herstellbar. Die Fixierung der Verstärkungsfäden erfolgt durch Verkreuzung der Verstärkungsfäden miteinander.

Ebenfalls schlauchförmige textile Strukturen sind durch das Umflechten eines Kerns beim Rundflecht- beziehungsweise Umflechtverfahren herstellbar. Verfahrensbedingt wird dabei immer eine von der Längs- und Umfangsrichtung der Textilien abweichende Verstärkungsfadenanordnung erreicht. In einem geringen Anteil können auch in Schlauchlängsrichtung angeordnete "Stehfäden" in die Schlauchstruktur integriert werden. Eine exakte tangentiale Fadenanordnung ist allerdings nicht möglich. Die Fixierung der Verstärkungsfäden erfolgt wie schon beim Weben durch Verkreuzung der Verstärkungsfäden.

Weiterhin sind textile Verstärkungsstrukturen bekannt, die durch in der Regel aufwändige Konfektionsprozesse hergestellt werden. Dabei erfolgen das Zuschneiden, das Ablegen der Zuschnitte auf entsprechende Formkörper, das Fixieren der Lage der Teile zueinander und das Verbinden der Teile. Das Fixieren beziehungsweise das Verbinden kann durch Fügeprozesse wie Schweißen, Kleben oder Nähen erfolgen.

Die US 3,859,824 A beschreibt eine Rundstrickmaschine zur Herstellung textiler Schlauchstrukturen mit zusätzlich eingebrachten Verstärkungsfäden in axialer und tangentialer Richtung. Die Fixierung beider Lagen zueinander erfolgt durch die Maschen. Der Durchmesser der Strukturen ist von der jeweils eingesetzten Maschine abhängig. Kommerziell eingesetzt werden Maschinen nach diesem Verfahren von der Firma CollinsCraft Composites (www.cofab.com). Ein weiteres Verfahren basierend auf der Methode des Rundstrickens beschreibt die US 4,183,232 A**.** Die Fixierung der Verstärkungslagen erfolgt hier durch einen in tangentialer Richtung umlaufenden Kettstich. Der Durchmesser der nach diesem Verfahren hergestellten in axialer und tangentialer Richtung verstärkten Schlauchbeziehungsweise Hohlstrukturen kann während der Produktion verändert werden. So ist es möglich, konische Hohlstrukturen herzustellen.

Die Patentschriften DE-PS 8 83 24**,** DE-AS 12 84 734**,** DE 196 05 002 A1**,** DE 41 07 316 C1**,** DE 39 31 414 A1 und DE 43 17 652 A1 beschreiben verschiedene Möglichkeiten, auf Flachstrickmaschinen einen umlaufenden Schussfaden in eine Schlauchstruktur einzubinden. Aktuelle Untersuchungen, wie bei **Offermann, Ünal und Engler, 2nd Colloquium on textile reinforced structures "Modellierung und fertigungsgerechte Entwicklung von Verstärkungsgestricken für Holz-Textil-Kunststoffverbunde" 2003 Dresden** offenbart, greifen diese Entwicklungen zur Herstellung schlauchförmiger Textilien mit einer monoaxialen Verstärkungsfadenanordnung auf, die je nach Fertigungsrichtung entweder in axialer Richtung oder in tangentialer Richtung angeordnet sein kann. Die Realisierung einer axial und tangential ausgerichteten biaxialen Verstärkung in einem Bauteil kann dann durch die Kombination von mehreren Schlauchstrukturen, die entweder axial oder tangential verstärkt sind, erreicht werden.

Die lokale Anpassung der Schlauch- beziehungsweise Hohlstrukturen an die Belastung kann bei den Webverfahren durch einen lokal veränderten Kettfadeneinsatz und/oder einen Schussfadenwechsel erreicht werden. Des Weiteren ist die Anpassung der Verstärkung an die Belastung durch Konfektionsprozesse bei einer veränderten Ablage der Verstärkungstextilien möglich.

Durch die Auswahl entsprechender Bindungskombinationen können bei der Verwendung der Verfahren zur Herstellung von Auffaltgeweben einflächige textile Strukturen hergestellt werden, in die lokal Taschen oder Laschen direkt bei der Produktion eingebracht werden. Weiterhin können durch konfektionstechnische Verfahren wie Nähen, Schweißen oder Kleben Verstärkungsstrukturen in Taschen- oder Laschenform auf flächige Textilien appliziert werden.

Es sind derzeit keine Verfahren oder Einrichtungen bekannt, welche die lokale Umordnung von axial angeordneten Verstärkungsfäden derart erlauben, dass diese bei einer Veränderung der Durchmesser der Schlauch- beziehungsweise Hohlstrukturen oder bei der Einbringung von Durchbrüchen in die textile Fläche weitestgehend in die textile Struktur eingebunden sind.

Die Nachteile der bisher bekannten Lösungen bestehen unter anderem darin, dass die Fixierung der Verstärkungsfadenlagen bei den durch Webverfahren hergestellten Schlauch- beziehungsweise Hohlstrukturen immer durch Fadenverkreuzungen erfolgt. Dadurch ist eine gestreckte Anordnung aller Verstärkungsfadensysteme nicht gegeben und das Verstärkungspotential der Fäden kann nicht vollständig genutzt werden.

Die Variation von Durchmessern innerhalb eines Gewebes ist beim Rundweben nur in einem sehr eng begrenzten Bereich durch Änderung der Fadenspannung und Bindung möglich. Die Umstellung dieser Webmaschinen zur Fertigung von Geweben mit unterschiedlichen Durchmessern ist technisch möglich, aber mit einem sehr hohen Aufwand verbunden. Bei Auffaltgeweben, die auf klassischen Spulenschützenwebmaschinen herstellbar sind, ist zwar eine Variation der Schlauchdurchmesser möglich, aber in den Übergangsbereichen kommt es zu Lageabweichungen von der exakten tangentialen Anordnung der Fäden. Für eine symmetrische Durchmesseränderung ist ein hoher Einstellungsaufwand erforderlich. Die Durchmesseränderung wird durch eine Veränderung der in die Gewebestruktur eingebundenen Fäden in axialer Richtung erreicht. Nach der Fertigstellung der Schlauch- beziehungsweise Hohlstruktur müssen die nicht eingebundenen Fäden manuell entfernt werden. Die Herstellung von Schlauchbeziehungsweise Hohlstrukturen mit einer Y- oder T-Form zum Beispiel für Verzweigungen ist sehr kompliziert und mit einem sehr hohen Fertigungsaufwand verbunden. Die zur Herstellung notwendigen Spulenschützen sind darüber hinaus für die Verarbeitung von spröden Verstärkungsfäden aus Glas oder Kohle prinzipbedingt weitgehend ungeeignet. Durch die geringen Umlenkradien am Spulenschützen werden die Verstärkungsfäden sehr stark beschädigt. Zudem ist auch der maximal nutzbare Fadenspeicher sehr klein, so dass eine produktive Fertigung nicht möglich ist.

Ebenfalls durch eine Verkreuzung der Verstärkungsfäden erfolgt die Fixierung der Lage der Fäden bei den Flechtverfahren, wodurch verfahrensbedingt keine gestreckte Anordnung aller Verstärkungsfäden möglich ist. Somit ist auch hier die optimale Anordnung und Ausnutzung des Potentials der Verstärkungsfäden nicht möglich. Für die Ausbildung einer Schlauchform ist es zusätzlich notwendig, einen entsprechend dimensionierten Kern vorzubereiten. Nach Abschluss des Umflechtens muss dieser dann wieder entfernt werden. Die Realisierung von Laschen oder Taschen ist auch bei diesen Verfahren nicht möglich.

Die Herstellung der textilen Strukturen mittels Konfektionsverfahren erfordert einen hohen Aufwand beim Zuschneiden und Ablegen der Einzelteile auf einem dafür notwendigen 3D-Werkzeug. Beim Zuschneiden der Einzelteile wird ein Teil der Verstärkungsfäden durchtrennt. Es sind somit in den Schnitt- und Fügebereichen keine durchgehenden, ununterbrochenen Verstärkungsfäden vorhanden. Zusätzlich kann es bei den Einzelteilen durch das Verbinden miteinander beziehungsweise das Fixieren der Lage zueinander, zum Beispiel bei Anwendung des Nähens, weiterhin zu einem An- und Durchstechen und dabei Zerstören von Verstärkungsfilamenten kommen. Darüber hinaus ist verfahrensbedingt in den Verbindungs- und Fixierbereichen in der Regel eine Materialdopplung notwendig, woraus eine erhöhte Bauteilmasse resultiert.

Auf den Rundstrickmaschinen nach der bereits genannten Druckschrift US 3,859,824 A sind textile Hohlstrukturen mit konstantem Durchmesser herstellbar. Dieser ist abhängig von der Maschinenkonfiguration und nur durch aufwändige Umbauten des Maschenbildungsbereiches und der Fadenzuführung an der Maschine begrenzt änderbar. Das Erzeugen von Durchbrüchen in der Struktur durch Umordnen der Verstärkungsfäden sowie die Herstellung von Laschen oder Taschen sind nicht möglich. Bei der in der US 4,183,232 A beschriebenen Möglichkeit zur aufwändigen Herstellung von Schlauch- beziehungsweise Hohlstrukturen durch unvollständiges Fixieren der tangentialen und axialen Fäden mittels eines tangential umlaufenden Kettenstichs erfolgt die Variation des Durchmessers durch eine unterschiedliche Anzahl von in die Struktur eingebundenen Fäden in tangentialer Richtung. Dazu ist ein aufwändiger Umbau der Garnführungselemente notwendig, um den Produktionsprozess an die unterschiedlichen Durchmesser anzupassen. Zusätzlich müssen alle nicht in die Struktur eingebundenen Fäden manuell entfernt werden. Die Maschenbildung erfolgt mit nur einer Nadel an einer umlaufenden Arbeitsstelle. Zwischen den Maschen in axialer Richtung gibt es keine Verbindung. Damit ist keine sichere Fixierung und Schiebefestigkeit der in dieser Richtung angeordneten Verstärkungsfäden gegeben. Die Herstellung von Taschen oder Laschen, die in eine textile Fläche integriert sind, ist mit diesem Verfahren ebenfalls nicht möglich.

Flachstrickverfahren ermöglichen lediglich das Einbringen einer Verstärkung in Schlauchgestricke als Schussfäden, also nur in einer Verstärkungsrichtung. Eine bi- oder mehraxiale Verstärkung von Schlauch- oder Hohlstrukturen ist erst durch die Kombination mehrerer Gestricke möglich. Dadurch ist ein erheblicher zusätzlicher Fertigungsaufwand erforderlich. Weiterhin sind die exakte, winkelgenaue Anordnung der Verstärkungsfäden und die Positionierung der einzelnen Gestricke beziehungsweise Verstärkungslagen zueinander bei der Herstellung der Preform erschwert. Die Gestricke beziehungsweise Verstärkungslagen sind zudem untereinander nicht verbunden, so dass hier Delaminationen im Bauteil auftreten können.

Bei den in der Veröffentlichungsschrift DE 196 05 002 A1 genannten Strukturen, bei denen auf dem vorderen beziehungsweise hinteren Nadelbett je eine Schlauchhälfte hergestellt wird, erfolgt die Einbindung eines Kettfadens im Abstand mehrerer Maschenstäbchen zur Stabilisierung des Gestricks. Weiterhin erfolgt die Fixierung des Kettfadens durch Henkel in den jeweiligen Gestrickflächen. Dadurch ist eine durchgehende gestreckte Anordnung der Kettfäden nicht mehr gegeben. Nicht hinreichend offenbart wird in der Offenlegungsschrift DE 196 05 002 A1**,** wie die Einbindung des Schussfadens derart erfolgt, dass er umlaufend über beide Gestrickflächen eingebunden ist.

In der WO 91/15620 A1 sind Verstärkungen für Verbundmaterialstrukturen beschrieben. Dabei ist ein Verstärkungsvorformling für eine längliche röhrenförmige Verbundmaterialstruktur, welche in verschiedenen Bereichen jeweils einen unterschiedlichen Querschnittsdurchmesser aufweist, vorgesehen. Der Vorformling wird durch Stricken eines länglichen röhrenförmigen Textilteils und durch Bildung der unterschiedlichen Querschnittsdurchmesserbereiche mittels gezielter Veränderung des Gestricks an ausgesuchten Stellen in Längsrichtung des Gestricks geformt. Der Vorformling wird auf einer Zweibett-Strickmaschine gefertigt. Die Änderung des Querschnittsdurchmessers kann durch Verkürzung um mindestens eine Masche bei einer oder mehreren Maschenreihen erfolgen. Der gestrickte Vorformling kann mit Verstärkungsfäden verstärkt werden. Jedoch ist auch in der WO 91/15620 A1 weder offenbart, wie eine durchgehend gestreckte Anordnung von Kettfäden realisiert werden soll, noch ist beschrieben, wie die Einbindung eines Schussfadens in der Zweibett-Strickmaschine derart erfolgen kann, dass er umlaufend über beide Gestrickflächen eingebunden ist.

Aus der WO 97/21860 A1 ist ein Mehrlagenflach- oder Mehrlagenrundgestrick aus zwei RL-Gestrickbahnen bekannt, die über ein drittes Fadensystem miteinander verbunden sind, sowie ein Verfahren zu seiner Herstellung, insbesondere zur Herstellung von Halbzeugen für Faserverbundwerkstoffe. Die zwei Gestrickbahnen werden über wenigstens eine Schar von Kettfäden zusammengehalten. Die Kettfäden und Schussfäden können entsprechend der Beanspruchung im Faserverbundwerkstoff verlaufen. Zum Beispiel kann eine bestimmte Anzahl von Kettfäden seitlich aus einer gestreckten Fadenlage wechseln und danach in die ursprüngliche Lage zurückkehren. Dadurch entsteht eine Freilassung von Kettfäden, die zur Aufnahme von Teilen, wie zum Beispiel Schrauben, geeignet ist.

Die EP 0 243 147 A2 beschreibt eine Gestrickverstärkung für die Nutzung mit synthetischem Kunststoffmaterial, um ein Verbundwerkstofferzeugnis herzustellen, welches einen röhrenförmigen Bereich mit einer Längsachse aufweist, die gebogen sein kann. Des Weiteren weist das Verbundwerkstofferzeugnis wenigstens einen Flansch auf, der sich in Richtung der Längsachse erstreckt. Bei Nutzung mehrerer verschiedener miteinander verbundener röhrenförmiger Abschnitte und einer Vielzahl von Flanschen ergeben sich zahlreiche Möglichkeiten für die Form von verstärkten Gestricken.

Die Druckschrift STOLL, T.: "LES TEXTILES TECHNIQUES POINTS FORTS DU RECTILIGNE", FILIERE MAILLE, INDUSTRIE TEXTILE, PARIS, FR, Nr. 30, 1. November 1994 (1994-11-01), XP000477803, ISSN: 1146-0733**,** offenbart schlauchförmige Gestricke, die unter Einbeziehung verschiedener Elemente ohne Schneiden oder Nähen als fertige Strickerzeugnisse erhalten werden können. Es können dabei zwei- oder dreidimensionale Erzeugnisse hergestellt werden, unter anderem rechtwinklige schlauchförmige Gestricke.

Die Aufgabe der Erfindung besteht in der Erzeugung textiler Schlauchbeziehungsweise Hohlstrukturen mit gestreckt angeordneter, mindestens biaxialer Verstärkung in allen Flächen für den Einsatz als Verstärkungsstruktur in Faserverbundbauteilen. Der Durchmesser der Strukturen soll bei der Herstellung veränderlich sein, um so den jeweiligen Erfordernissen angepasst werden zu können.

Die äußere Gestalt der Schlauch- beziehungsweise Hohlstrukturen soll dabei unterschiedlich sein. Insbesondere sind durchgängig zylindrische Formen mit konstanten Durchmessern, Kegelstumpf-Formen mit über die Länge variierenden Durchmessern und Y- oder T-Formen denkbar, wie sie zum Beispiel für Rohrabzweigungen benötigt werden.

Weitere Aufgaben sind die Integration von Taschen oder Laschen, die als Befestigungselemente oder Ähnliches dienen, in flächige, mindestens biaxial verstärkte Flachgestricke, sowie die Anpassung der Verstärkungsstruktur an die Belastung durch Änderung des Verstärkungsanteils jeder Fläche, zum Beispiel durch die gezielte Zuordnung von Verstärkungsfäden zur jeweils stärker belasteten Fläche der Hohlstruktur. Zusätzlich könnten einzelne Kettfäden axialer Grundausrichtung so in den Flächen der Schlauchbeziehungsweise Hohlstrukturen angeordnet werden, dass in den Strukturen Durchbrüche entstehen, die an ihren Rändern durch die Art der Umordnung der Kettfäden zusätzlich verstärkt werden.

Die der Erfindung zugrunde liegende Aufgabe wird mit der Bereitstellung eines Verfahrens zur Herstellung eines zumindest bereichsweise schlauch- oder hohlkörperförmig ausgebildeten Gestricks, welches zumindest bereichsweise mit mindestens biaxial gestreckt angeordneten Verstärkungsfäden versehen ist, gelöst, wobei die Verstärkungsfäden als Schussfäden zumindest bereichsweise spiralförmig in tangentialer Umfangsrichtung einerseits und als Kettfäden in axialer Längsrichtung des schlauch- oder hohlkörperförmigen Gestricks andererseits angeordnet sind. Die Verstärkungsfäden sind durch mindestens ein Maschenfadensystem fixiert. Dabei weist das schlauch- oder hohlkörperförmige Gestrick einen entlang der Längsrichtung variablen Wert für den Durchmesser infolge jeweils unterschiedlicher Maschenanzahlen pro Maschenreihe über dem Umfang des schlauch- oder hohlkörperförmigen Gestricks auf.

Das resultierende, erfindungsgemäße Gestrick ist zumindest teilweise schlauch- oder hohlkörperförmig mit mindestens biaxial gestreckt angeordneten Verstärkungsfäden ausgebildet. Die Verstärkungsfäden sind einerseits als Schussfäden zumindest bereichsweise spiralförmig in tangentialer Umfangsrichtung und andererseits als Kettfäden in axialer Längsrichtung des schlauch- oder hohlkörperförmigen Gestricks angeordnet. Die Verstärkungsfäden sind durch mindestens ein Maschenfadensystem fixiert. Dabei weist das schlauch- oder hohlkörperförmige Gestrick in einer Ausführungsform einen entlang der Längsrichtung variablen Wert für den Durchmesser infolge jeweils unterschiedlicher Maschenanzahlen pro Maschenreihe über dem Umfang des schlauch- oder hohlkörperförmigen Gestricks auf. Des Weiteren sind bei dieser Lösung im schlauch- oder hohlkörperförmigen Gestrick Bereiche mit einer lokal veränderten Kettfadendichte infolge des Kettfadenversatzes vorgesehen, wodurch Eigenschaftsmodifikationen möglich werden, die insbesondere zur Ausbildung und Verstärkung von Krafteinleitungsstellen genutzt werden können.

Eine weitere Ausführungsform der Erfindung ist ein Gestrick, welches ebenfalls zumindest teilweise schlauch- oder hohlkörperförmig ausgebildet ist. Auch dieses Gestrick ist zumindest bereichsweise mit mindestens biaxial gestreckt angeordneten Verstärkungsfäden ausgestattet, die zumindest bereichsweise als Schussfäden spiralförmig in tangentialer Umfangsrichtung einerseits und als Kettfäden in axialer Längsrichtung des schlauch- oder hohlkörperförmigen Gestricks andererseits angeordnet sind und die durch mindestens ein Maschenfadensystem fixiert sind. Dabei weist das schlauch- oder hohlkörperförmige Gestrick einen entlang der Längsrichtung konstanten Wert für den Durchmesser oder einen variablen Wert für den Durchmesser bei jeweils unterschiedlicher Maschenanzahl über dem Umfang des schlauch- oder hohlkörperförmigen Gestricks auf. Bei dieser Lösung grenzen Bereiche des schlauch- oder hohlkörperförmigen Gestricks an Bereiche an, die nicht schlauch- oder hohlkörperförmig ausgebildet sind.

In einer besonders bevorzugten Ausführung der Erfindung weist das schlauch- oder hohlkörperförmige Gestrick einen variablen Wert für den Durchmesser bei jeweils unterschiedlicher Maschenanzahl über dem Umfang des schlauch- oder hohlkörperförmigen Gestricks bei gleichzeitig konstanter Maschendichte in tangentialer Umfangsrichtung auf.

Dabei kann das schlauch- oder hohlkörperförmige Gestrick derart ausgebildet sein, dass die innere Verstärkungsfadenlage, die sich an der Innenseite des schlauch- oder hohlkörperförmigen Gestricks befindet, durch in axialer Längsrichtung ausgerichtete Kettfäden gebildet wird. In einer alternativen Ausführungsform wird die innere Verstärkungsfadenlage im Gegensatz dazu von den Schussfäden gebildet.

Einzelne Bereiche des Gestricks können unterschiedlich viele Lagen Kett- und Schussfäden aufweisen. Andererseits können Bereiche des Gestricks ausschließlich Maschenfäden aufweisen. In einer weiteren Ausgestaltung der Erfindung sind im schlauch- und hohlkörperförmigen Gestrick Verzweigungen, insbesondere Y- oder T-Formen, mit mindestens biaxialer Verstärkung ausgebildet. In einer weiteren Ausgestaltung kann der in tangentialer Umfangsrichtung über weite Bereiche spiralförmig verlaufende Schussfaden in Teilbereichen auch mäanderförmig angeordnet sein, so dass Bereiche spiralförmiger und mäanderförmiger Schussfadenanordnung ineinander übergehen.

Bei der oben genannten erfindungsgemäßen Lösung, in der schlauch- oder hohlkörperförmige Bereiche an nicht schlauch- oder hohlkörperförmige Bereiche angrenzen, können diese schlauch- oder hohlkörperförmigen Bereiche in Form von Taschen oder Laschen zur Integration zusätzlicher Elemente ausgebildet sein. Diese zusätzlichen Elemente sind insbesondere für die Befestigung an anderen Bauteilen oder die Verbindung mit anderen Bauteilen oder für die Krafteinleitung in die angrenzenden, nicht schlauch- oder hohlkörperförmigen Bereiche vorgesehen.

Erfindungsgemäß dient zur Herstellung aller zuvor genannten Gestricke allgemein ein Verfahren, bei dem durch eine neuartige Bindungskombination eine zielgerichtete Anordnung von Maschenfaden-, Schussfaden- und Kettfadensystemen in einer mindestens biaxial verstärkten, zumindest teilweise schlauch- oder hohlkörperförmigen Flachgestrickstruktur auf einer Flachstrickmaschine mit mindestens zwei Stricknadelbetten erfolgt, wobei ein spiralförmig umlaufender Verstärkungsfaden in tangentialer Umfangsrichtung der schlauch- oder hohlkörperförmigen Flachgestrickstruktur eingebracht wird. Bevorzugt wird als umlaufender Verstärkungsfaden mindestens ein Schussfaden in tangentialer Umfangsrichtung mit einem Schussfadenführer eingebracht, während die Kettfäden vorzugsweise axial angeordnet werden. Die Maschenfäden fixieren die Verstärkungsstruktur.

Eine Ausführungsform des erfindungsgemäßen Verfahrens besteht darin, dass mit Hilfe eines Systems zur Integration eines umlaufenden Schussfadens, bestehend aus
- mindestens einer Übergabeeinrichtung für den Schussfadenführer inklusive Schussfaden und
- mindestens einem dem Schussfadenführer nachgeführten Schussfadenspender für einen umlaufend zu integrierenden Schussfaden,
der umlaufende Schussfaden vor den Kettfäden des jeweils aktiven Stricknadelbetts geführt wird und der Schussfadenführer inklusive Schussfaden von Stricknadelbett zu Stricknadelbett an einer frei wählbaren Übergabeposition innerhalb oder am Ende der jeweiligen Gestrick- und Arbeitsbreite übergeben wird. Dabei sind die eine oder mehreren Übergabeeinrichtungen relativ zu den Stricknadelbetten jeweils parallel ausgerichtet und ortsveränderlich ausgebildet. Dadurch kann die Übergabeposition des Schussfadenführers innerhalb der Gestrick- und Arbeitsbreite von Maschenreihe zu Maschenreihe definiert verändert werden. Damit können eine Veränderung der aktuellen Arbeitsbreite und damit eine Änderung des Durchmessers des schlauch- oder hohlkörperförmigen Gestricks erreicht werden. In dieser Ausführungsform weist das System zur Integration eines umlaufenden Schussfadens vorteilhaft mindestens eine ortsveränderliche Übergabeeinrichtung auf. In einer weiteren Ausführung des Systems zur Integration eines umlaufenden Schussfadens weist dieses vorzugsweise mindestens eine stationäre Übergabeeinrichtung auf, bei der die Übergabe an einer festen Übergabeposition oder leicht um mindestens eine Nadel verschoben davon ausgeführt wird.

Die Ausbildung von Taschen oder Laschen zur Integration zusätzlicher Elemente, zum Beispiel für die Befestigung an anderen Bauteilen oder die Verbindung mit anderen Bauteilen oder für die Krafteinleitung in die Bauteil- und damit in die Verstärkungsstruktur an ebenen, biaxial aufgebauten, flachgestrickten Verstärkungsstrukturen, ist ebenfalls durch eine Bindungskombination auf Basis der bereits genannten Bindungskombinationen möglich. Dabei wird in Teilbereichen der Gestrick- und Arbeitsbreite nach einer der vorgenannten Bindungskombinationen ein schlauch- oder hohlkörperförmiges Gestrick gebildet, während in den benachbarten Bereichen die Flächen der textilen Struktur während der Herstellung miteinander verbunden werden. Auf diese Weise können schlauch- oder hohlkörperförmige Strukturen in flächige, mindestens biaxial verstärkte Strukturen lokal integriert werden, wodurch lokal mindestens biaxial verstärkte Taschen oder Laschen zu Befestigungszwecken eingebracht werden können.

Durch die Erfindung wird der Aufwand zur Veränderung des Durchmessers bei der Herstellung von schlauch- oder hohlkörperförmigen Gestricken und damit der Gestrickgeometrie sehr deutlich reduziert. Die Durchmesser der schlauch- oder hohlkörperförmigen Gestricke mit mindestens biaxialer Verstärkung können sehr einfach während der Fertigung, zum Beispiel bei kegelstumpfähnlichen Strukturen, verändert werden. Die Schussfäden als Verstärkungsfäden in tangentialer Umfangsrichtung sind dabei nicht unterbrochen. Durch eine geeignete Fadenmanipulation der in axialer Längsrichtung angeordneten Kettfäden als Verstärkungsfäden während der Fertigung der schlauch- oder hohlkörperförmigen Gestricke mit veränderlichem Durchmesser bei konstanter Maschendichte am Umfang können diese vollständig in die Gestrickstruktur integriert werden. Die Strukturen zeichnen sich durch eine gestreckte Anordnung der Verstärkungsfadensysteme in den Flächen aus. Die Anordnung der Verstärkungslagen in den Flächen der Strukturen in axialer Längs- und tangentialer Umfangsrichtung zueinander wird durch mindestens ein Maschenfadensystem fixiert. Die Anzahl der Verstärkungslagen je Bereich der schlauch- oder hohlkörperförmigen Strukturen kann durch eine gezielte Kettfadenmanipulation an die Belastung angepasst werden. Die Gestricke weisen zudem gute Drapiereigenschaften und die Fähigkeit zur Aufnahme von Zug-, Druck-, Biege- und Torsionskräften im Verbund auf. Nicht nur der Durchmesser des schlauch- oder hohlkörperförmigen Gestricks kann während der Herstellung verändert werden, ebenso können mit dem erfindungsgemäßen Verfahren, wie bereits erwähnt, textile Verzweigungen, wie Y- oder T-Formen, mit mindestens biaxialer Verstärkung hergestellt werden. Die Herstellung dieser Formen erfolgt dabei durch die gleichzeitige Fertigung von schlauch- oder hohlkörperförmigen Gestricken in unterschiedlicher Anzahl und die geeignete stricktechnische Verbindung beziehungsweise Trennung der einzelnen Gestricke zur Erzielung der gewünschten Form.

Eine weitere Ausgestaltung des erfindungsgemäßen Verfahrens besteht darin, dass die Anordnung der Verstärkungsfäden des schlauch- oder hohlkörperförmigen Flachgestricks bei der Fertigung so erfolgt, dass
- die innere Verstärkungslage von axial ausgerichteten Kettfäden als Verstärkungsfäden gebildet wird,
- mindestens ein Schussfaden wechselnd in der vorderen und hinteren Fläche des schlauch- oder hohlkörperförmigen Flachgestricks eingebunden wird und gleichzeitig
- die Fixierung der Verstärkungslagen gegeneinander durch einen Maschenbildungsvorgang wechselnd auf dem vorderen und dem hinteren Stricknadelbett der Flachstrickmaschine erfolgt.

In einer alternativen Ausführungsform des erfindungsgemäßen Verfahrens wird die innere Verstärkungslage aus in tangentialer Umfangsrichtung angeordneten Schussfäden als Verstärkungsfäden gebildet. Dabei sind für die Einbindung des Schussfadens in die vordere Fläche eines schlauch- oder hohlkörperförmigen Flachgestricks in einer Ausgestaltung dieser Ausführungsform die folgenden Schritte vorgesehen:
- Bereitstellen von nicht mit Faden belegten Nadeln auf dem hinteren Stricknadelbett über der Gestrick- und Arbeitsbreite,
- Bilden einer Maschenreihe durch das Vorlegen eines Maschenfadens und die Verformung zu Maschenfadenschleifen, zumindest teilweise wechselnd auf den nicht mit Maschenfaden belegten Nadeln des hinteren und den Nadeln des vorderen Stricknadelbetts,
- Einlegen des Schussfadens in diese Maschenreihe,
- Umhängen der auf dem hinteren Stricknadelbett befindlichen Fadenschleifen auf das vordere Stricknadelbett zum Fixieren der Verstärkungsfadenanordnung.
Die Einbindung des Schussfadens in die hintere Fläche des schlauch- oder hohlkörperförmigen Flachgestricks erfolgt umgekehrt analog.

In einer abweichenden Ausgestaltung dieser Ausführungsform sind für die Einbindung des Schussfadens in die vordere Fläche eines schlauch- oder hohlkörperförmigen Flachgestricks die folgenden Schritte vorgesehen:
- Bilden einer Maschenreihe zumindest teilweise abwechselnd auf den Nadeln des vorderen Stricknadelbetts und auf Hilfselementen über der Gestrick- und Arbeitsbreite, wobei die Hilfselemente insbesondere als in Zusatznadelbetten angeordnete Nadeln, in einem gegenüberliegenden Stricknadelbett angeordnete Schieber von Schiebernadeln oder in einem Hilfsnadelbett angeordnete hakenförmige Halteelemente ausgebildet sein können,
- Bilden der Maschenreihe durch das Vorlegen eines Fadens und die Verformung zu Fadenschleifen durch die Nadeln und Hilfselemente oder durch das zumindest teilweise Umhängen von Fadenschleifen von ausgewählten Nadeln des vorderen Stricknadelbetts auf die Hilfselemente,
- Einlegen des Schussfadens in diese Maschenreihe,
- Fixieren der Verstärkungsfadenanordnung durch das Bilden einer weiteren Maschenreihe zumindest teilweise abwechselnd auf den Nadeln des vorderen Stricknadelbetts und auf Hilfselementen über der Gestrick- und Arbeitsbreite oder das Umhängen der auf den Hilfselementen befindlichen Fadenschleifen auf die Nadeln des vorderen Stricknadelbetts.

Die Einbindung des Schussfadens in die hintere Fläche des schlauch- oder hohlkörperförmigen Flachgestricks erfolgt wiederum umgekehrt analog.

In einer Ausgestaltung des erfindungsgemäßen Verfahrens wird durch Kettfadenversatz mit Hilfe einer Kettfadenversatzeinrichtung, die eine nadelgenaue Positionierung der Kettfäden erlaubt, in Kombination mit der Variation der Maschenstruktur im schlauch- oder hohlkörperförmigen Gestrick die Erzeugung von Bereichen mit einer lokal veränderten Kettfadendichte infolge des Kettfadenversatzes erreicht. Dadurch werden Eigenschaftsmodifikationen möglich, die insbesondere zur Ausbildung und Verstärkung von Krafteinleitungsstellen genutzt werden können. Dabei können Befestigungselemente, Krafteinleitungselemente sowie sonstige Funktionselemente, insbesondere Sensoren und elektrische Bauteile, in die Bereiche mit einer lokal veränderten Kettfadendichte integriert werden. In einer Variante dieser Ausgestaltung des Verfahrens werden die Kettfäden in Scharen so angeordnet, dass sie während der Fertigung gruppenweise senkrecht zur Fertigungsrichtung der schlauch- oder hohlkörperförmigen Gestricke versetzt werden können. Dabei erfolgt durch gezielte Manipulation der Kettfadenscharen eine Umordnung derart, dass in der Struktur Durchbrüche entstehen. Die Art der Umordnung der Kettfäden führt gleichzeitig zu einer Verstärkung der Randbereiche der Durchbrüche. In einer abweichenden Variante werden die Kettfäden so angeordnet, dass sie während der Fertigung einzeln und unabhängig senkrecht zur Fertigungsrichtung der schlauch- oder hohlkörperförmigen Gestricke versetzt werden können. Dabei erfolgt durch gezielte Manipulation einzelner Kettfäden eine Umordnung derart, dass in der Struktur Durchbrüche entstehen und die Art der Umordnung der Kettfäden gleichzeitig zu einer Verstärkung der Randbereiche der Durchbrüche führt. Darüber hinaus kann der Kettfadenversatz mit Hilfe einer Kettfadenversatzeinrichtung auch für die gezielte Umordnung der Kettfäden in den Randbreichen der schlauch- oder hohlkörperförmigen Gestricke eingesetzt werden, wenn die Durchmesser der Gestricke während der Fertigung variiert werden. Dadurch kann die Einbindung der Kettfäden in die Gestrickstruktur erreicht werden. Der Nachbearbeitungsaufwand für das Entfernen von nicht eingebundenen Verstärkungsfäden wird dadurch deutlich reduziert.

Die nach dem beschriebenen Flachstrickverfahren erzeugten schlauch- oder hohlkörperförmigen Gestricke können als Verstärkungshalbzeuge mit mindestens biaxialer Verstärkung und umlaufenden Verstärkungsfäden in tangentialer Umfangsrichtung verwendet werden. Ein besonderer Vorteil dieser Verstärkungshalbzeuge besteht darin, dass dabei alle Verstärkungsfäden innerhalb der Struktur gestreckt angeordnet sind. Die Verstärkungshalbzeuge werden insbesondere durch die Konsolidierung mit einem Matrixwerkstoff für die Herstellung von Faserverbundwerkstoffen, Composites oder sonstigen vorwiegend technischen Anwendungen wie Planen oder textilen Tragwerken eingesetzt.

Weitere Einzelheiten, Merkmale und Vorteile der Erfindung ergeben sich aus der nachfolgenden Beschreibung von Ausführungsbeispielen mit Bezugnahme auf die Figuren.

Es zeigen:
- **Fig. 1:**: die Realisierung einer axial ausgerichteten monoaxialen Verstärkung in einem Bauteil, Stand der Technik;
- **Fig. 2:**: die Realisierung einer tangential ausgerichteten monoaxialen Verstärkung in einem Bauteil, Stand der Technik;
- **Fig. 3:**: die Darstellung eines biaxial verstärkten schlauch- oder hohlkörperförmigen Gestricks mit axialer und tangentialer Verstärkungsfadenanordnung;
- **Fig. 4:**: einen spiralförmig in tangentialer Umfangsrichtung verlaufenden Schussfaden in einem schlauch- oder hohlkörperförmigen Gestrick;
- **Fig. 5:**: einen teilweise mäanderförmig verlaufenden Schussfaden in einem schlauch- oder hohlkörperförmigen Gestrick;
- **Fig. 6:**: Kettfadenversatz in einem schlauch- oder hohlkörperförmigen Gestrick mit einem entlang der Längsrichtung unterschiedlichen Wert für den Durchmesser;
- **Fig. 7:**: Kettfadenversatz bei Erzeugung eines Durchbruchs mit Anordnung der Kettfäden in Scharen;
- **Fig. 8:**: Kettfadenversatz bei Erzeugung eines Durchbruchs mit Anordnung der Kettfäden einzeln;
- **Fig. 9:**: einen Querschnitt aus dem Arbeitsbereich einer Flachstrickmaschine mit einer schematischen Darstellung der Bindung einer Ausführungsform der schlauch- oder hohlkörperförmigen Gestricke; und
- **Fig. 10:**: die Erzeugung des Gestricks auf einer Flachstrickmaschine mit Übergabeeinrichtungen.

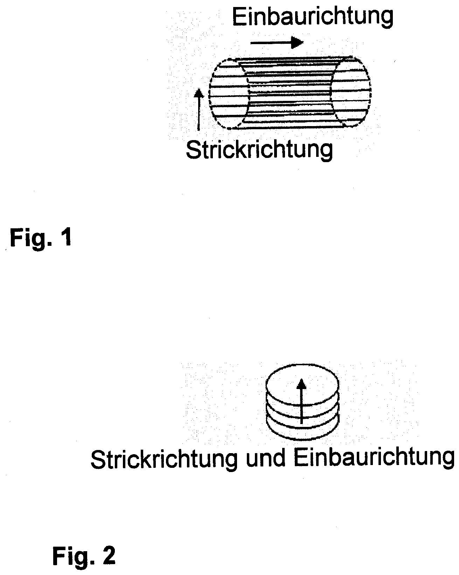

Die **Fig. 1** und **Fig. 2** zeigen zur Herstellung schlauchförmiger Textilien geeignete monoaxiale Verstärkungsfadenanordnungen gemäß zweier Darstellungen aus dem Stand der Technik nach Offermann, Ünal und Engler, 2nd Colloquium on textile reinforced structures "Modellierung und fertigungsgerechte Entwicklung von Verstärkungsgestricken für Holz-Textil-Kunststoffverbunde", 2003, Dresd**en.** Dabei zeigt **Fig. 1** eine in axialer Längsrichtung angeordnete Verstärkung, während in **Fig. 2** die Verstärkung in tangentialer Umfangsrichtung angeordnet ist.

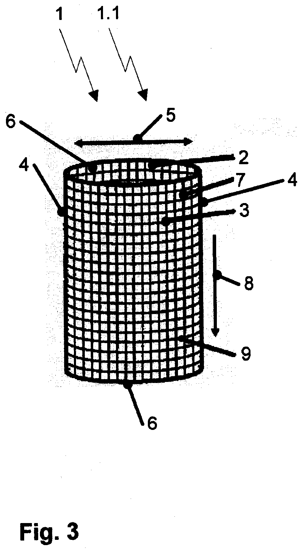

Die **Fig. 3** zeigt eine schematische Darstellung eines biaxial verstärkten schlauch- oder hohlkörperförmigen Gestricks 1, das durch ein Verfahren auf einer Flachstrickmaschine mit zwei Nadelbetten herstellbar ist. Das schlauch- oder hohlkörperförmige Gestrick 1 gemäß **Fig. 3** ist ein Flachgestrick 1.1, das aus einer hinteren Fläche 2 und einer vorderen Fläche 3 besteht. Dabei sind die Flächen 2, 3 jeweils an den Rändern 4 miteinander verbunden. Dadurch entstehen die gemäß **Fig. 3** gekennzeichneten Stirnseiten 6 des schlauch- oder hohlkörperförmigen Gestricks 1. Die Bewegung des Schlittens 26 erfolgt entlang der Maschinenbreitenrichtung 5 der Flachstrickmaschine. Die Kettfäden 7 sind senkrecht zur Maschinenbreitenrichtung 5 entlang der Fertigungsrichtung 8 orientiert. Bezüglich des schlauch- oder hohlkörperförmigen Gestricks 1 liegt somit vorzugsweise eine Verstärkungsfadenorientierung der Kettfäden 7 in axialer Längsrichtung vor. Senkrecht zu den Kettfäden 7 sind die Schussfäden 9 orientiert. Im Gestrick 1 liegt daher vorzugsweise eine Verstärkungsfadenorientierung der Schussfäden 9 in tangentialer Umfangsrichtung vor.

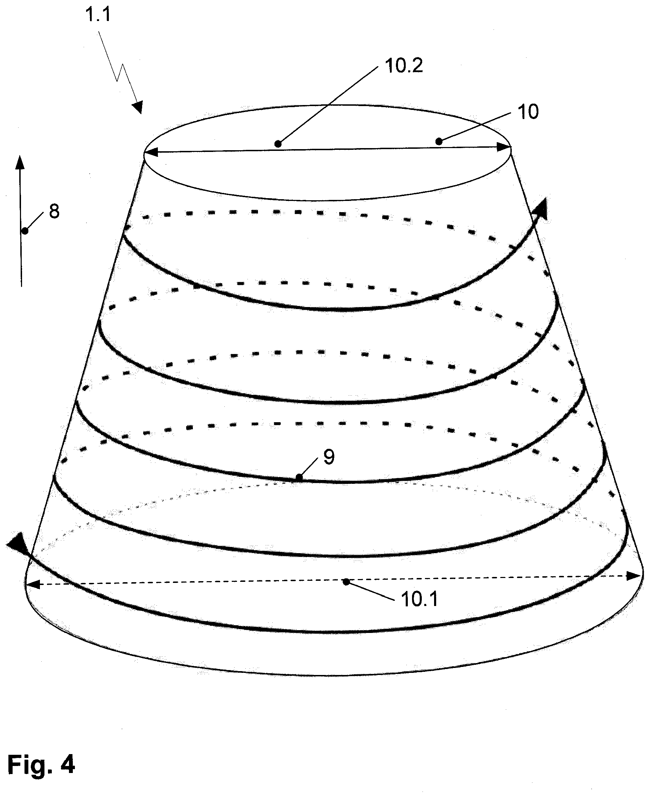

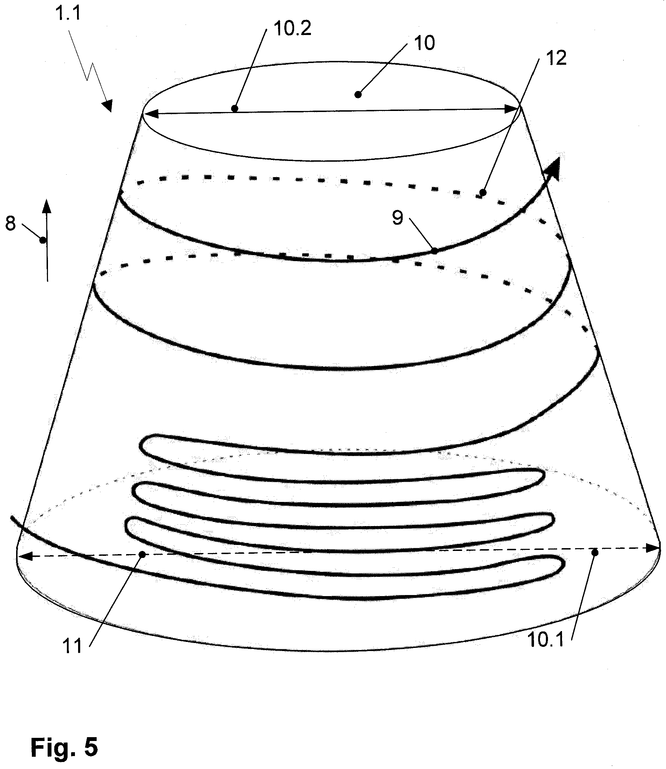

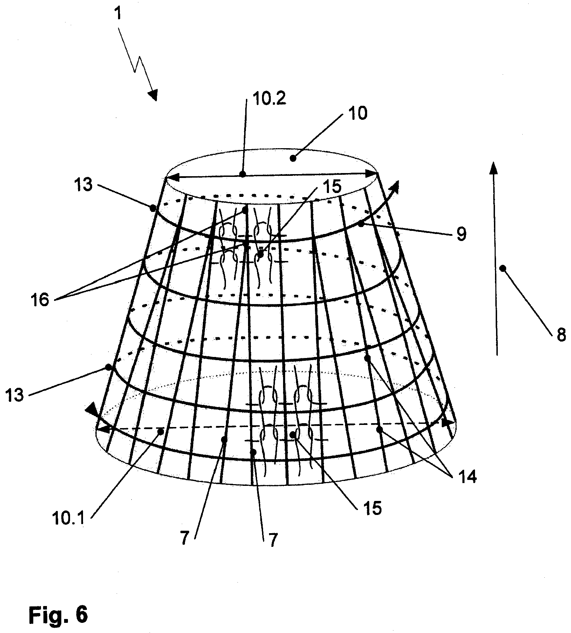

Die **Fig. 4** zeigt einen durchgehend spiralförmig in tangentialer Umfangsrichtung verlaufenden Schussfaden 9 in einem schlauch- oder hohlkörperförmigen Gestrick 1.1 mit einem entlang der axialen Längsbeziehungsweise Fertigungsrichtung 8 variablen Wert für den Durchmesser 10. Der Durchmesser 10.1 im unteren Bereich des schlauch- oder hohlkörperförmigen Gestricks wird in Fertigungsrichtung 8 auf einen kleineren Durchmesser 10.2 im oberen Bereich reduziert.
Dagegen zeigt die **Fig. 5** einen sich verändernden Verlauf des Schussfadens 9. Der in tangentialer Umfangsrichtung verlaufende Schussfaden 9 ist im Teilbereich 11 des schlauch- oder hohlkörperförmigen Gestricks 1.1 mäanderförmig angeordnet, wobei der untere Teilbereich 11 mäanderförmiger Schussfadenanordnung in den oberen Teilbereich 12 mit spiralförmiger tangentialer Schussfadenanordnung übergeht. Das schlauch- oder hohlkörperförmige Gestrick 1.1 weist einen entlang der axialen Längsrichtung 8 variablen Wert für den Durchmesser 10 infolge jeweils unterschiedlicher Maschenanzahlen pro Maschenreihe 13 über dem Umfang des schlauch- oder hohlkörperförmigen Gestricks 1.1 auf, wie im Folgenden in **Fig. 6** beispielhaft gezeigt.

Die **Fig. 6** zeigt einen Kettfadenversatz in einem schlauch- oder hohlkörperförmigen Gestrick 1.1 mit einem entlang der axialen Längsbeziehungsweise Fertigungsrichtung 8 variablen Wert für den Durchmesser 10.

Das schlauch- oder hohlkörperförmige Gestrick 1.1 weist einen entlang der axialen Längsrichtung 8 variablen Wert für den Durchmesser 10 infolge jeweils unterschiedlicher Maschenanzahlen pro Maschenreihe 13 über dem Umfang des schlauch- oder hohlkörperförmigen Gestricks 1.1 auf. Im unteren breiteren Maschenbereich 14 des schlauch- oder hohlkörperförmigen Gestricks 1.1 ist jeder Masche 15 (Maschen 15 sind in **Fig. 6** in zwei kleinen Ausschnitten dargestellt) einer Maschenreihe 13 beispielhaft ein Kettfaden 7 zugeordnet, das Verhältnis Maschenzahl einer Maschenreihe 13 zu Kettfadenanzahl beträgt dann eins zu eins. Aufgrund des nach oben hin in Längsrichtung 8 abnehmenden Durchmessers 10, 10.1, 10.2 und einer daraus folgenden abnehmenden Maschenzahl bei konstant bleibender Anzahl an Kettfäden 7 verkleinert sich dieses Verhältnis, weshalb nicht mehr jede Masche 15 nur einen Kettfaden 7 aufnehmen kann. In der Variante gemäß **Fig. 6** werden benachbarte Kettfäden 7 durch Kettfadenversatz im oberen schmaleren Maschenbereich 16 des schlauch- oder hohlkörperförmigen Gestricks 1.1 zusammengeführt, so dass im Maschenbereich 16 eine Masche 15 zum Teil zwei oder mehrere Kettfäden 7, gemäß **Fig. 6** zwei Kettfäden 7, aufnimmt.

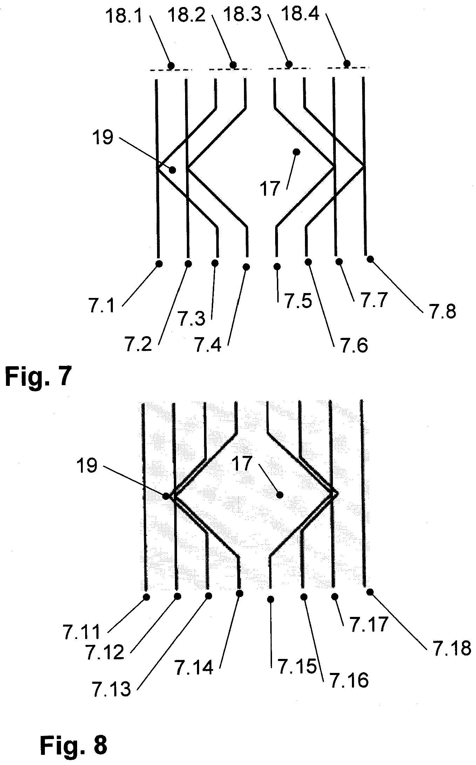

Alternativ dazu können einzelne Kettfäden 7 auch gekürzt werden, wenn nicht mehr genügend Maschen 15 für jeweils einen Kettfaden 7 zur Verfügung stehen.
Die Erzeugung von Durchbrüchen 17 wird ebenfalls durch Kettfadenversatz mit Hilfe einer Kettfadenversatzeinrichtung erreicht, die eine nadelgenaue Positionierung der Kettfäden 7 erlaubt. Die Kettfäden 7 können dabei gemäß **Fig. 7** in Scharen 18.1, 18.2, 18.3, 18.4 angeordnet werden. Jede Schar 18.1, 18.2, 18.3, 18.4 besteht aus zwei, wie in **Fig. 7****,** oder mehreren Kettfäden 7, die untereinander parallel ausgerichtet sind. Wie in **Fig. 7** beispielhaft gezeigt, wird beim Kettfadenversatz der zweiten Kettfadenschar 18.2 auf die Position der ersten Kettfadenschar 18.1 die parallele Ausrichtung und Beabstandung der beiden versetzten Kettfäden 7 der Kettfadenschar 18.2 zueinander beibehalten, indem der versetzte Kettfaden 7.3 der zweiten Kettfadenschar 18.2 auf die Position des unversetzten ersten Kettfadens 7.1 der ersten Kettfadenschar 18.1 und der versetzte zweite Kettfaden 7.4 der zweiten Kettfadenschar 18.2 auf die Position hinter dem Kettfaden 7.2 der ersten Kettfadenschar 18.1 gelangt. Durch den Kettfadenversatz der zweiten Kettfadenschar 18.2 auf die Position der ersten Kettfadenschar 18.1 sowie den Kettfadenversatz der dritten Kettfadenschar 18.3 auf die Position der vierten Kettfadenschar 18.4 entstehen Durchbrüche 17. Durch das Hintereinanderlegen der Kettfäden 7.4 und 7.2 sowie 7.3 und 7.1 und das Hintereinanderlegen der Kettfäden 7.5 und 7.7 sowie 7.6 und 7.8 werden die Randbereiche 19 des Durchbruchs 17 verstärkt.

Gemäß **Fig. 8** können die Kettfäden 7.14, 7.13, 7.15, 7.16 auch einzeln unabhängig voneinander gegeneinander verschoben werden. Dargestellt ist in **Fig. 8** eine Kettfadenanordnung mit den äußeren Kettfäden 7.11 und 7.18, den unversetzten benachbarten einzelnen Kettfäden 7.12 und 7.17 und den mittleren Kettfäden 7.13, 7.14, 7.15 und 7.16.
Dabei werden die mittleren Kettfäden 7.13 und 7.14 auf dieselbe Position, nämlich auf die Position des einzelnen Kettfadens 7.12 wie auch die mittleren Kettfäden 7.15 und 7.16 auf die Position des einzelnen Kettfadens 7.17, unabhängig voneinander versetzt. Die Umordnung erfolgt ebenfalls derart, dass in dem schlauch- oder hohlkörperförmigen Gestrick 1.1 Durchbrüche 17 entstehen. Die Art der Umordnung der Kettfäden 7, die ein Hintereinanderlegen der Kettfäden 7.12, 7.13 und 7.14 sowie 7.15, 7.16 und 7.17 zur Folge hat, führt wiederum gleichzeitig zu einer Verstärkung der Randbereiche 19 der Durchbrüche 17.

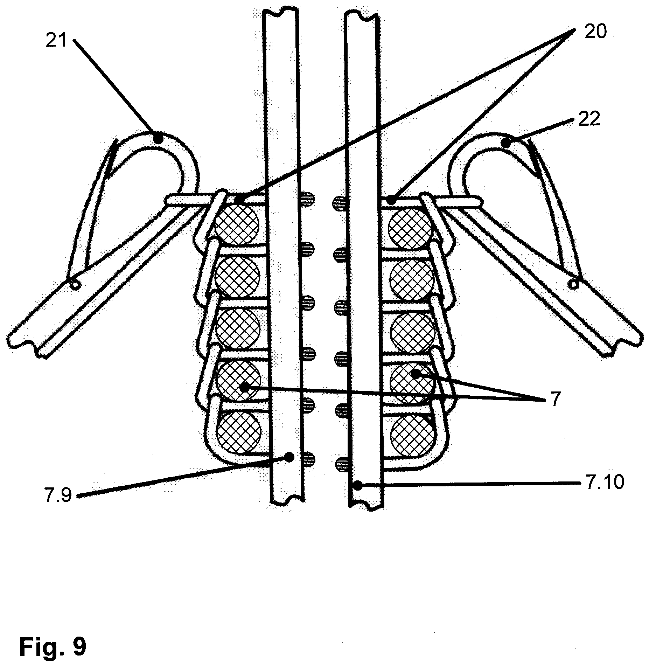

Die **Fig. 9** zeigt einen Querschnitt aus dem Arbeitsbereich einer Flachstrickmaschine mit einer schematischen Darstellung der Bindung. In der Ausführung der Bindung gemäß **Fig. 9** wird der spiralförmig umlaufende Schussfaden 9 außen, das heißt, in dem schlauch- oder hohlkörperförmigen Gestrick 1, um die axial ausgerichteten Kettfäden 7 herumgeführt. Es ist jeweils einer der zum vorderen Stricknadelbett zugeordneten Kettfäden 7.9 und einer der zum hinteren Stricknadelbett zugeordneten Kettfäden 7.10 dargestellt. Die Kettfäden 7.9, 7.10 sind gemäß **Fig. 9** senkrecht zur Ausrichtung der Stricknadelbetten und somit in Längs- beziehungsweise Fertigungsrichtung 8 des Gestricks 1 orientiert. Die Fixierung der Kettfäden 7.9, 7.10 und des umlaufenden Schussfadens 9 zueinander erfolgt durch den Maschenfaden 20. Dargestellt ist zudem jeweils eine der Nadeln 21 des vorderen Stricknadelbetts und der Nadeln 22 des hinteren Stricknadelbetts als Arbeitselement für die Bildung der Maschen 15 unter Verwendung des Maschenfadens 20.

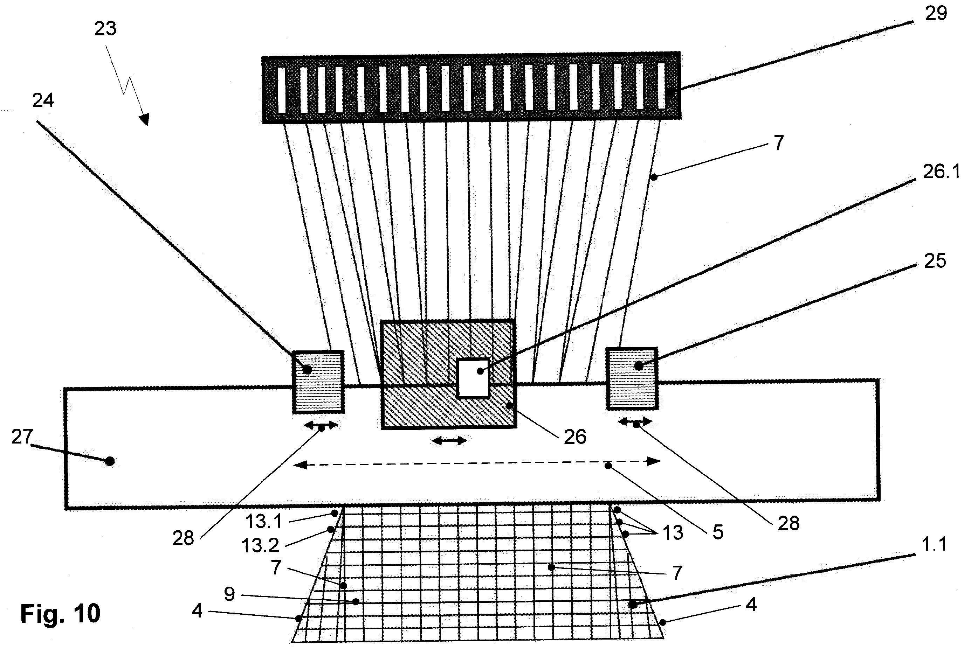

**Fig. 10** zeigt schematisch die Herstellung eines schlauch- oder hohlkörperförmigen Gestricks 1.1 mit den Rändern 4 auf einer Flachstrickmaschine 23 mit einer ersten Übergabeeinrichtung 24 und einer zweiten Übergabeeinrichtung 25. Zwischen den beiden Übergabeeinrichtungen 24, 25 wird der Schlitten 26 mit den Fadenführern und Fadenspeichern 26.1 für den umlaufenden Schussfaden 9 (Schussfadenführer) und den Maschenfaden 20 (siehe **Fig. 9****)** bewegt. Der umlaufende Schussfaden wird vor den Kettfäden 7 des jeweils aktiven Stricknadelbetts, entweder des vorderen Stricknadelbetts oder des hinteren Stricknadelbetts der beiden Stricknadelbetten 27, die in **Fig. 10** übereinanderliegend als eine Einheit dargestellt sind und in denen die Nadeln 21, 22 (siehe **Fig. 9****)** angeordnet sind, geführt. Der Schussfadenführer inklusive Schussfaden 9 wird vom vorderen Stricknadelbett zum hinteren Stricknadelbett beziehungsweise umgekehrt an einer frei wählbaren Übergabeposition 28 für den Schussfadenführer innerhalb oder am Ende der jeweiligen Gestrick- und Arbeitsbreite 5 übergeben. Dabei sind die beiden Übergabeeinrichtungen 24, 25 jeweils parallel ausgerichtet und relativ zu den Stricknadelbetten 27 ortsveränderlich, in denen die Nadeln 21, 22 (siehe **Fig. 9****)** angeordnet sind, ausgebildet. Dadurch kann die Übergabeposition 28 des Schussfadenführers innerhalb der Gestrick- und Arbeitsbreite 5 zum Beispiel von Maschenreihe 13.1 zu Maschenreihe 13.2 definiert verändert werden, wie in **Fig. 10** gezeigt. Das System zur Integration eines umlaufenden Schussfadens 9 kann auch mindestens eine stationäre Übergabeeinrichtung 24, 25 mit mindestens einer definierten oder leicht um mindestens eine Nadel davon verschobenen Übergabeposition 28 aufweisen, wobei die Übergabeposition 28 für jede Maschenreihe angepasst werden kann. Insgesamt sind somit folgende Ausführungen des Systems zur Integration eines umlaufenden Schussfadens als Möglichkeiten eingeschlossen:
1. ein System mit zwei verschiebbaren Übergabeeinrichtungen 24, 25,
2. ein System mit einer festen und einer verschiebbaren Übergabeeinrichtung 24, 25,
3. ein System mit nur einer festen Übergabeeinrichtung, mit der auf beiden Seiten eine Übergabe erfolgen kann, und
4. ein System mit nur einer beweglichen Übergabeeinrichtung, die auf beiden Seiten die Übergabe realisiert,
wobei bei allen Systemen, insbesondere aber bei den Systemen mit festen Übergabeeinrichtungen 24, 25, die konkrete Übergabeposition 28 nadelgenau von Maschenreihe 13, 13.1 zu Maschenreihe 13, 13.2 angepasst werden kann. Die Kettfäden 7 werden aus einem Kettfadenspeicher 29 zugeführt.

### LISTE DER BEZUGSZEICHEN

- 1: Gestrick
- 1.1: schlauch- oder hohlkörperförmiges Gestrick, schlauch- oder hohlkörperförmiges Flachgestrick; schlauch- oder hohlkörperförmige Bereiche, Flachgestrick, Flachgestrickstruktur
- 2: hintere Fläche
- 3: vordere Fläche
- 4: Ränder
- 5: Maschinenbreitenrichtung, Gestrick- und Arbeitsbreite
- 6: Stirnseiten
- 7: Kettfäden
- 7.1: erster Kettfaden der ersten Kettfadenschar 18.1
- 7.2: zweiter Kettfaden der ersten Kettfadenschar 18.1
- 7.3: erster Kettfaden der zweiten Kettfadenschar 18.2
- 7.4: zweiter Kettfaden der zweiten Kettfadenschar 18.2
- 7.5: erster Kettfaden der dritten Kettfadenschar 18.3
- 7.6: zweiter Kettfaden der dritten Kettfadenschar 18.3
- 7.7: erster Kettfaden der vierten Kettfadenschar 18.4
- 7.8: zweiter Kettfaden der vierten Kettfadenschar 18.4
- 7.9: zum vorderen Stricknadelbett zugeordneter Kettfaden
- 7.10: zum hinteren Stricknadelbett zugeordneter Kettfaden
- 7.11: äußerer Kettfaden
- 7.12: einzelner mittlerer Kettfaden
- 7.13: mittlerer Kettfaden
- 7.14: mittlerer Kettfaden
- 7.15: mittlerer Kettfaden
- 7.16: mittlerer Kettfaden
- 7.17: einzelner mittlerer Kettfaden
- 7.18: äußerer Kettfaden
- 8: Fertigungsrichtung, Längsrichtung
- 9: Schussfäden
- 10: Durchmesser
- 10.1: Durchmesser im unteren Bereich
- 10.2: Durchmesser im oberen Bereich
- 11: Teilbereich des schlauch- oder hohlförmigen Gestricks 1.1, Teilbereich mäanderförmiger Schussfadenanordnung
- 12: Teilbereich des schlauch- oder hohlförmigen Gestricks 1.1, Teilbereich spiralförmiger Schussfadenanordnung
- 13: Maschenreihe
- 13.1: Maschenreihe
- 13.2: Maschenreihe
- 14: unterer Maschenbereich
- 15: Maschen
- 16: oberer Maschenbereich
- 17: Durchbrüche
- 18: Kettfadenscharen
- 18.1: erste Kettfadenschar
- 18.2: zweite Kettfadenschar
- 18.3: dritte Kettfadenschar
- 18.4: vierte Kettfadenschar
- 19: Randbereiche der Durchbrüche 17
- 20: Maschenfaden
- 21: Nadel des vorderen Stricknadelbetts
- 22: Nadel des hinteren Stricknadelbetts
- 23: Flachstrickmaschine
- 24: erste Übergabeeinrichtung für den Schussfadenführer
- 25: zweite Übergabeeinrichtung für den Schussfadenführer
- 26: Schlitten mit Schussfadenführer
- 26.1: Fadenspeicher, Schussfadenspender
- 27: Stricknadelbetten
- 28: Übergabeposition für die Übergabe des Schussfadenführers
- 29: Kettfadenspeicher mit Kettfäden 7

## Patentansprüche

1. Verfahren zur Herstellung eines Gestricks, das zumindest bereichsweise schlauch- oder hohlkörperförmig ausgebildet ist, bei dem durch eine Bindungskombination eine Anordnung von Maschenfaden (20)-, Schussfaden (9)- und Kettfaden (7)-Systemen in einer mindestens biaxial verstärkten, zumindest teilweise schlauch- oder hohlkörperförmig ausgebildeten Flachgestrickstruktur auf einer Flachstrickmaschine (23) mit mindestens zwei Stricknadelbetten (27) erfolgt, wobei ein spiralförmig umlaufender Schussfaden (9) in tangentialer Umfangsrichtung der schlauch- oder hohlkörperförmigen Flachgestrickstruktur (1.1) mit einem Schussfadenführer eingebracht wird, **dadurch gekennzeichnet, dass** mit Hilfe eines Systems zur Integration eines umlaufenden Schussfadens (9), bestehend aus
- mindestens einer Übergabeeinrichtung (24, 25) für den Schussfadenführer inklusive Schussfaden (9) und
- mindestens einem dem Schussfadenführer nachgeführten Schussfadenspender (26.1) für einen umlaufend zu integrierenden Schussfaden (9), der umlaufende Schussfaden (9) vor den Kettfäden (7) des jeweils aktiven Stricknadelbetts (27) geführt wird und der Schussfadenführer inklusive Schussfaden (9) von Stricknadelbett (27) zu Stricknadelbett (27) an einer frei wählbaren Übergabeposition (28) innerhalb oder am Ende der jeweiligen Gestrick- und Arbeitsbreite (5) übergeben werden, wobei
- die eine oder mehrere Übergabeeinrichtungen (24, 25) jeweils parallel ausgerichtet und ortsveränderlich relativ zu den Stricknadelbetten (27) ausgebildet sind, wodurch die Übergabeposition (28) des Schussfadenführers innerhalb der Gestrick- und Arbeitsbreite (5) von Maschenreihe (13, 13.1) zu Maschenreihe (13, 13.2) definiert verändert werden kann, und/oder
- das System zur Integration eines umlaufenden Schussfadens (9) mindestens eine stationäre Übergabeeinrichtung (24, 25) aufweist, bei der die Übergabe im Falle eines konstanten Durchmessers entlang der Längsrichtung des schlauch- oder hohlkörperförmig ausgebildeten Gestricks (1.1) an einer festen Übergabeposition (28) oder im Falle eines leicht variablen Durchmessers entlang der Längsrichtung des schlauch- oder hohlkörperförmig ausgebildeten Gestricks (1.1) um mindestens eine Nadel verschoben davon ausgeführt wird, wobei die Übergabeposition (28) für jede Maschenreihe unterschiedlich sein kann und entsprechend angepasst wird.

2. Verfahren nach Anspruch 1, **dadurch gekennzeichnet, dass** die Anordnung der Verstärkungsfäden des schlauch- oder hohlkörperförmigen Flachgestricks (1.1) bei der Fertigung so erfolgt, dass
- die innere Verstärkungslage von axial ausgerichteten Kettfäden (7) gebildet wird,
- die Fixierung der Verstärkungslagen gegeneinander in den beiden schlauchbildenden Flächen (2, 3) durch einen Maschenbildungsvorgang wechselnd auf dem vorderen und dem hinteren Stricknadelbett der Flachstrickmaschine (23), das heißt, erst auf dem vorderen Stricknadelbett und anschließend, nach Fertigstellung der Maschenreihe auf dem vorderen Stricknadelbett, auf dem hinteren Stricknadelbett oder in umgekehrter Reihenfolge, erfolgt und gleichzeitig
- mindestens ein Schussfaden (9) wechselnd in der vorderen (3) und hinteren Fläche (2) des schlauch- oder hohlkörperförmigen Flachgestricks (1.1) eingebunden wird.

3. Verfahren nach Anspruch 1 oder 2, **dadurch gekennzeichnet, dass** durch Kettfadenversatz mit Hilfe einer Kettfadenversatzeinrichtung, die eine nadelgenaue Positionierung der Kettfäden (7) erlaubt, im schlauch- oder hohlkörperförmigen Gestrick (1.1) Bereiche mit einer lokal veränderten Kettfadendichte infolge des Kettfadenversatzes erzeugt werden.

4. Verfahren nach Anspruch 3, **dadurch gekennzeichnet, dass** die Kettfäden (7) beim Kettfadenversatz in Kettfadenscharen (18, 18.1, 18.2, 18.3, 18.4) so angeordnet werden, dass sie während der Fertigung gruppenweise senkrecht zur Längsrichtung (8) des Gestricks und Anordnung der Stricknadelbetten (27) versetzt werden können, wobei durch gezielte Manipulation der Kettfadenscharen (18.2, 18.3) eine Umordnung derart erfolgt, dass in der Struktur Durchbrüche (17) entstehen und die Art der Umordnung der Kettfäden (7) gleichzeitig zu einer Verstärkung der Randbereiche (19) der Durchbrüche (17) führt.

5. Verfahren nach Anspruch 3, **dadurch gekennzeichnet, dass** die Kettfäden (7) beim Kettfadenversatz während der Fertigung unabhängig voneinander einzeln parallel zur Längsrichtung (8) und Anordnung der Stricknadelbetten (27) versetzt werden, wobei durch gezielte Manipulation einzelner Kettfäden (7) eine Umordnung derart erfolgt, dass in der Struktur Durchbrüche (17) entstehen und die Art der Umordnung der Kettfäden (7) gleichzeitig zu einer Verstärkung der Randbereiche (19) der Durchbrüche (17) führt.

6. Verfahren nach einem der Ansprüche 3 bis 5, **dadurch gekennzeichnet, dass** während und/oder nach der Fertigung der Gestricke (1) Befestigungselemente, Krafteinleitungselemente sowie sonstige Funktionselemente, insbesondere Sensoren und elektrische Bauteile, in die Bereiche mit lokal veränderter Kettfadendichte beziehungsweise die Durchbrüche (17) integriert werden.

7. Gestrick, hergestellt durch ein Verfahren nach einem der Ansprüche 1 bis 6, welches zumindest bereichsweise schlauch- oder hohlkörperförmig ausgebildet ist und welches zumindest bereichsweise mit mindestens biaxial gestreckt angeordneten Verstärkungsfäden versehen ist, die als Schussfäden (9) zumindest bereichsweise spiralförmig in tangentialer Umfangsrichtung einerseits und als Kettfäden (7) in Längsrichtung (8) des schlauch- oder hohlkörperförmigen Gestricks (1.1) andererseits angeordnet sind und die durch mindestens ein Maschenfaden (20)-System fixiert sind, wobei mindestens ein schlauch- oder hohlkörperförmiger Gestrickbereich (1.1) mit mindestens biaxial gestreckt angeordneten Verstärkungsfäden einen entlang der Längsrichtung (8) variablen Wert für den Durchmesser (10, 10.1, 10.2) infolge jeweils unterschiedlicher Maschenanzahlen pro Maschenreihe (13) über dem Umfang des schlauch- oder hohlkörperförmigen Gestricks (1.1) aufweist.

8. Gestrick nach Anspruch 7, **dadurch gekennzeichnet, dass** im schlauch- oder hohlkörperförmigen Gestrick (1.1) Bereiche mit einer lokal veränderten Kettfadendichte infolge des Kettfadenversatzes vorgesehen sind.

9. Gestrick, hergestellt durch ein Verfahren nach einem der Ansprüche 1 bis 6, welches zumindest bereichsweise schlauch- oder hohlkörperförmig ausgebildet ist und welches zumindest bereichsweise mit mindestens biaxial gestreckt angeordneten Verstärkungsfäden versehen ist, die als Schussfäden (9) zumindest bereichsweise spiralförmig in tangentialer Umfangsrichtung einerseits und als Kettfäden (7) in Längsrichtung (8) des schlauch- oder hohlkörperförmigen Gestricks (1.1) andererseits angeordnet sind und die durch mindestens ein Maschenfaden (20)-System fixiert sind, wobei mindestens ein schlauch- oder hohlkörperförmiger Gestrickbereich (1.1) mit mindestens biaxial gestreckt angeordneten Verstärkungsfäden einen entlang der Längsrichtung (8) konstanten Wert für den Durchmesser (10) oder einen variablen Wert für den Durchmesser (10, 10.1, 10.2) bei jeweils unterschiedlicher Maschenanzahl über dem Umfang des schlauch- oder hohlkörperförmigen Gestrickbereichs (1.1) aufweist und der Bereich des schlauch- oder hohlkörperförmigen Gestrickbereichs (1.1) an Bereiche des Gestricks (1) angrenzt, die nicht schlauch- oder hohlkörperförmig ausgebildet sind.

10. Gestrick nach einem der Ansprüche 7 bis 9, **dadurch gekennzeichnet, dass** das schlauch- oder hohlkörperförmige Gestrick (1.1) einen variablen Wert für den Durchmesser (10, 10.1, 10.2) bei jeweils unterschiedlicher Maschenanzahl über dem Umfang des schlauch- oder hohlkörperförmigen Gestricks bei gleichzeitig konstanter Maschendichte in tangentialer Umfangsrichtung aufweist.

11. Gestrick nach einem der Ansprüche 7 bis 10, **dadurch gekennzeichnet, dass** eine innere Verstärkungsfadenlage, die sich an der Innenseite des schlauch- oder hohlkörperförmigen Gestricks (1.1) befindet, durch in Längsrichtung (8) ausgerichtete Kettfäden gebildet wird.

12. Gestrick nach einem der Ansprüche 7 bis 11, **dadurch gekennzeichnet, dass** eine innere Verstärkungsfadenlage von den Schussfäden (9) gebildet wird.

13. Gestrick nach einem der Ansprüche 7 bis 12, **dadurch gekennzeichnet, dass** Bereiche des Gestricks (1) unterschiedlich viele Lagen Kettfäden (7) und Schussfäden (9) aufweisen.

14. Gestrick nach einem der Ansprüche 7 bis 13, **dadurch gekennzeichnet, dass** Bereiche des Gestricks (1) ausschließlich Maschenfäden (20) aufweisen.

15. Gestrick nach einem der Ansprüche 7 bis 14, **dadurch gekennzeichnet, dass** im schlauch- und hohlkörperförmigen Gestrick (1.1) Gestrickverzweigungen, insbesondere Y- oder T-Formen, mit mindestens biaxialer Verstärkung ausgebildet sind.

16. Gestrick nach einem der Ansprüche 7 bis 15, **dadurch gekennzeichnet, dass** der in tangentialer Umfangsrichtung verlaufende Schussfaden (9) in Teilbereichen (11) mäanderförmig angeordnet ist, so dass Teilbereiche (12) spiralförmiger und Teilbereiche (11) mäanderförmiger Schussfadenanordnung ineinander übergehen.

17. Gestrick nach einem der Ansprüche 7 bis 16, **dadurch gekennzeichnet, dass** schlauch- oder hohlkörperförmige Bereiche (1.1) an nicht schlauch- oder hohlkörperförmige Bereiche angrenzen und in Form von Taschen oder Laschen zur Integration zusätzlicher Elemente während der Fertigung oder im Anschluss an die Fertigung des Gestricks (1) ausgebildet sind, insbesondere für die Befestigung an anderen Bauteilen oder die Verbindung mit anderen Bauteilen oder für die Krafteinleitung in die angrenzenden nicht schlauch- oder hohlkörperförmigen Bereiche.

18. Verwendung von Gestricken nach einem der Ansprüche 7 bis 17 als Verstärkungshalbzeuge mit mindestens biaxialer Verstärkung und umlaufenden Verstärkungsfäden in tangentialer Umfangsrichtung, wobei alle Verstärkungsfäden dabei innerhalb der Struktur gestreckt angeordnet sind.

## Claims

1. A method for producing a knitted fabric implemented at least in regions in the form of a tube or hollow body, an arrangement of knit thread (20), weft thread (9), and warp thread (7) systems in an at least biaxially reinforced flat-knitted structure, at least partially in the form of a tube or hollow body, is produced by a binding combination on a flat knitting machine (23) having at least two knitting needle beds (27), a spiral-shaped circumferential weft thread (9) being introduced by means of a weft thread guide in the tangential circumferential direction of the tubular or hollow flat-knitted structure (1.1), **characterized in that** the circumferential weft thread (9) is guided before the warp threads (7) of the active knitting needle bed (27) by means of a system for integrating a circumferential weft thread (9), made of at least one transfer device (24, 25) for the weft thread guide including the weft thread (9) and at least one weft thread dispenser (26.1) tracking the weft thread guide for a weft thread (9) to be integrated circumferentially, and the weft thread guide including the weft thread (9) is transferred from knitting needle bed (27) to knitting needle bed (27) at a freely selectable transfer position (28) within or at the end of the knitting and working width (5) in each case, wherein the one or more transfer devices (24, 25) are each implemented in parallel alignment and portable relative to the knitting needle beds (27), whereby the transfer position (28) of the weft thread guide within the knitting and working width (5) can be changed in a defined manner from knitting row (13, 13.1) to knitting row (13, 13.2), and/or the system for integrating a circumferential weft thread (9) comprises at least one stationary transfer device (24, 25) wherein the transfer is performed at a fixed transfer position (28) for the case of a constant diameter along the longitudinal direction of the tubular or hollow knitted fabric (1.1), or offset by at least one needle for the case of a slightly variable diameter along the longitudinal direction of the tubular or hollow knitted fabric (1.1), wherein the transfer position (28) can be different for each knit row and is adapted accordingly.

2. The method according to Claim 1, **characterized in that** the reinforcing threads of the tubular or hollow flat knitted fabric (1.1) are disposed during production such that
- the inner reinforcing layer is formed by axially oriented warp threads (7),
- the fixing of the reinforcing layers relative to each other in the two areas forming tubes (2, 3) is done by a knit forming process, alternatingly on the front and rear knitting needle bed of the flat knitting machine (23), that is, first on the front knitting needle bed and then, after completing the knitting row on the front knitting needle bed, on the rear knitting needle bed, or in the reverse of that sequence, and at the same time
- at least one weft thread (9) is alternatingly incorporated in the front and rear area (2) of the flat tubular or hollow knitted fabric (1.1).

3. The method according to Claim 1 or 2, **characterized in that** regions having a locally modified warp thread density due to warp thread offset are generated in the tubular or hollow knitted fabric (1.1) by warp thread offset by means of a warp thread offset device allowing precise needle positioning of the warp threads (7).

4. The method according to Claim 3, **characterized in that** the warp threads (7) in the warp thread offset are disposed in warp thread clusters (18, 18.1, 18.2, 18.3, 18.4) so as to be able to be offset during production in groups perpendicular to the longitudinal direction (8) of the knitted fabric and arrangement of the knitting needle beds (27), wherein a rearrangement occurs by specifically manipulating the warp thread clusters (18.2, 18.3), such that penetrations (17) occur in the structure, and the type of rearranging of the warp threads (7) leads simultaneously to reinforcing the edge regions (19) of the penetrations (17).

5. The method according to Claim 3, **characterized in that** when offsetting during production , the warp threads (7) are offset independently of each other and individually parallel to the longitudinal direction (8) and arrangement of the knitting needle bed (27), wherein a rearrangement occurs by specifically manipulating individual warp threads (7) such that penetrations (17) occur in the structure, and the type of rearranging of the warp threads (7) leads simultaneously to reinforcing the edge regions (19) of the penetrations (17).

6. The method according to any one of the claims 3 through 5, **characterized in that** during and/or after producing the knitted fabrics (1), fastening elements, load transmission elements, and other functional elements, particularly sensors and electrical components, are integrated in the regions having locally modified warp thread density and in the penetrations (17).

7. A knitted fabric producing by a method according to any one of the claims 1 through 6, implemented at least in regions in the form of a tube or hollow body and having reinforcing threads extended at least biaxially at least in regions and disposed as weft threads (9) in a spiral form in the tangential circumferential direction at least in regions and as warp threads (7) in the longitudinal direction (8) of the tubular or hollow knitted fabric (1.1), and fixed by at least one knit thread (20) system, wherein at least one knitted fabric region (1.1) in the form of a tube or hollow body, having reinforcing threads disposed extended at least biaxially, has a variable value for the diameter (10, 10.1, 10.2) along the longitudinal direction (8) because of different knit counts per knit row (13) along the circumference of the tubular or hollow knitted fabric (1.1).

8. The knitted fabric according to claim 7, **characterized in that** regions having a locally modified warp thread density due to warp thread offset are provided in the tubular or hollow knitted fabric (1.1) (1.1).

9. A knitted fabric producing by a method according to any one of the claims 1 through 6, implemented at least in regions in the form of a tube or hollow body and having reinforcing threads extended at least biaxially at least in regions and disposed as weft threads (9) in a spiral form in the tangential circumferential direction at least in regions and as warp threads (7) in the longitudinal direction (8) of the tubular or hollow knitted fabric (1.1), and fixed by at least one knit thread (20) system, wherein at least one tubular or hollow knitted region (1.1) having at least biaxially extended reinforcing threads has a constant value for the diameter (10) along the longitudinal direction (8) or a variable value for the diameter (10, 10.1, 10.2) and different knit counts over the circumference of the tubular or hollow knitted region (1.1), and the region of the tubular or hollow knitted region (1.1) is adjacent to regions of the knitted fabric that are not tubular or hollow.

10. The knitted fabric according to any one of the claims 7 through 9, **characterized in that** the tubular or hollow knitted fabric (1.1) has a variable value for the diameter (10, 10.1, 10.2) and different knit counts over the circumference of the tubular or hollow knitted fabric and a constant knit density in the tangential circumferential direction.

11. The knitted fabric according to any one of the claims 7 through 10, **characterized in that** an inner reinforcing thread layer present at the inner side of the tubular or hollow knitted fabric (1.1) is formed by warp threads oriented in the longitudinal direction (8).

12. The knitted fabric according to any one of the claims 7 through 11, **characterized in that** an inner reinforcing thread layer is formed by the weft threads (9).

13. The knitted fabric according to any one of the claims 7 through 12, **characterized in that** regions of the knitted fabric (1) comprise different quantities of layers of warp threads (7) and weft threads (9).

14. The knitted fabric according to any one of the claims 7 through 13, **characterized in that** regions of the knitted fabric (1) comprise exclusively knit threads (20).

15. The knitted fabric according to any one of the claims 7 through 14, **characterized in that** knit branches, particularly T-shaped or Y-shaped, having at least biaxial reinforcement are implemented in the tubular and hollow knitted fabric (1.1).

16. The knitted fabric according to any one of the claims 7 through 15, **characterized in that** the weft threads (9) running in the tangential circumferential direction are serpentine in partial regions (11), so that partial regions (12) of spiral-shaped and partial regions (11) of serpentine weft thread arrangements transition into each other.

17. The knitted fabric according to any one of the claims 7 through 16, **characterized in that** tubular or hollow regions (1.1) are adjacent to non-tubular, non-hollow regions and are implemented during production or after production of the knitted fabric (1) in the form of pockets or tabs for integrating additional elements, particularly for attaching to other components or connecting to other components or for transmitting force into the adjacent non-tubular, non-hollow regions.

18. A use of knitted fabrics according to any one of the claims 7 through 17 as reinforcing components having at least biaxial reinforcement and circumferential reinforcing threads in the tangential circumferential direction, wherein all reinforcing threads are thereby extended within the structure.

## Revendications

1. Procédé de fabrication d'un ouvrage textile en forme, au moins par endroits, de tube ou de corps creux, selon lequel une combinaison de liens crée un agencement de systèmes composés d'un fil de maille (20), d'un fil de trame (9) et d'un fil de chaîne (7), dans une structure de tricot plat à renforcement au moins biaxial, en forme, au moins partiellement, de tube et de corps creux, sur une machine à tricoter (23) avec au moins deux lits d'aiguilles à tricoter (27), un fil de trame (9) circonférentiel en forme de spirale étant intégré dans le sens tangentiel à la structure de tricot plat en forme de tube ou de corps creux (1.1) avec un guide de fil de trame, **caractérisé en ce que**, à l'aide d'un système pour l'intégration d'un fil de trame circonférentiel (9), se composant d'au moins un dispositif de transfert (24, 25) pour le guide de fil de trame avec fil de trame inclus (9) et d'au moins un distributeur de fil de trame (26.1) attaché au guide de fil de trame pour un fil de trame (9) à intégrer circulairement, le fil de trame (9) circulaire est guidé devant le fil de chaine (7) du lit d'aiguilles à tricoter (27) actif et le guide de fil de trame avec fil de trame (9) est transféré de lit d'aiguilles à tricoter (27) en lit d'aiguilles à tricoter (27) vers une position de transfert (28) librement sélectionnable sur la largeur d'ouvrage et de travail (5) correspodnante ou à son extrémité, un ou plusieurs dispositifs de transfert (24, 25) étant disposés parallèlement et de façon mobile par rapport au lit d'aiguilles à tricoter (27), la position de transfert (28) du guide de fil de trame sur la largeur de l'ouvrage et de travail (5) peut être modifiée de façon définie de rang de mailles (13, 13.1) en rang de mailles (13, 13.2), et /ou le système pour l'intégration d'un fil de trame (9) circonférentiel présente au moins un dispositif de transfert (24, 25) stationnaire, à partir duquel le transfert est effectué suivant une position de transfert (28) fixe si le diamètre est constant dans le sens longitudinal de l'ouvrage textile en forme de tube ou de corps creux (1.1) ou suivant un décalage d'au moins une aiguille si le diamètre subit une légère variation dans le sens longitudinal de l'ouvrage textile en forme de tube ou de corps creux (1.1), la position de transfert (28) pouvant être différente et adaptée comme nécessaire pour chaque rang de mailles.

2. Procédé selon la revendication 1, **caractérisé en ce que** l'agencement des fils de renforts du tricot plat en forme de tube ou de corps creux (1.1) intervient lors de la fabrication de telle façon que
- la couche de renfort interne est formée de fils de chaîne (7) à orientation axiale,
- la fixation des couches de renfort les unes contre les autres dans les deux surfaces formant le tube (2, 3) est effectuée à l'aide d'un procédé de formation de mailles par alternance sur le lit d'aiguilles à tricoter avant et arrière de la machine à tricot plat (23), c'est-à-dire qu'elle intervient d'abord sur le lit d'aiguilles à tricoter avant, puis, après achèvement de la ligne de mailles, sur le lit d'aiguilles à tricoter arrière ou dans l'ordre inverse ; et simultanément
- au moins un fil de trame (9) est intégré en alternance dans la surface avant (3) et arrière (2) du tricot plat en forme de tube ou de corps creux (1.1).

3. Procédé selon l'une quelconques des revendications 1 ou 2, **caractérisé en ce qu'**un décalage du fil de chaîne réalisé à l'aide d'un dispositif de décalage du fil de chaîne, permettant un positionnement à l'aiguille près des fils de chaîne (7), permet de réaliser des zones avec une épaisseur de fil de chaîne localement modifiée dans l'ouvrage textile en forme de tube ou de corps creux (1.1).

4. Procédé selon la revendication 3, **caractérisé en ce que** les fils de chaîne (7) sont disposés, au niveau du décalage du fil de chaîne en nappes de fils de chaîne (18, 18.1, 18.2, 18.3, 18.4), de telle façon que, pendant la fabrication, ils peuvent être décalés de façon groupée, perpendiculairement au sens longitudinal (8) de l'ouvrage textile et de l'agencement des lits d'aiguilles à tricoter (27), une manipulation ciblée des nappes de fils de chaîne (18.2, 18.3) induisant un réagencement tel que des ouvertures (17) sont créées dans la structure et que le type de réagencement des fils de chaîne (7) mène simultanément à un renforcement de la zone de bordure (19) des ouvertures (17).

5. Procédé selon la revendication 3, **caractérisé en ce que** les fils de chaîne (7) sont décalés indépendamment les uns des autres pendant la fabrication, lors du décalage des fils de chaîne, parallèlement au sens longitudinal (8) et à l'agencement des lits d'aiguilles à tricoter (27), la manipulation ciblée de fils de chaîne (7) individuels induisant un réagencement tel que des ouvertures (17) apparaissent dans la structure et que le type de réagencement des fils de chaîne (7) mène simultanément à un renforcement des zones de bordure (19) des ouvertures (17).

6. Procédé selon l'une quelconque des revendications 3 à 5, **caractérisé en ce que** pendant et/ou après la fabrication des ouvrages textiles (1), des éléments de fixation, des éléments d'introduction de force et des éléments fonctionnels divers, notamment des capteurs et des composants électriques sont intégrés dans les zones comprenant des épaisseurs modifiées de fils de chaine ou des ouvertures (17).

7. Ouvrage textile, fabriqué par un procédé selon l'une quelconque des revendications 1 à 6, qui est, au moins par endroits, en forme de tube ou de corps creux et qui est doté, au moins par endroits, de fils de renfort disposés selon un agencement au moins biaxial, qui sont disposés, d'une part, comme des fils de trame (9) formant, au moins par endroits, une spirale dans le sens circonférentiel tangentiel et d'autre part comme des fils de chaîne (7) dans le sens longitudinal (8) de l'ouvrage textile en forme de tube ou de corps creux (1.1) et qui sont fixés par au moins un système de fil de maille (20), au moins une zone de l'ouvrage textile en forme de tube ou de corps creux (1.1) avec des fils de renfort disposés selon un agencement au moins biaxial résentant une valeur variable le long du sens longitudinal (8) pour le diamètre (10, 10.1, 10.2), ladite valeur variable résultant de nombres de mailles différents par rang de mailles (13) sur le pourtour de l'ouvrage textile en forme de tube ou de corps creux (1.1).

8. Ouvrage textile selon la revendication 7, **caractérisé en ce que** des zones, dotées d'une épaisseur de fil de chaîne localement modifiée du fait du décalage du fil de chaîne, sont prévues à l'intérieur de l'ouvrage textile en forme de tube ou de corps creux (1.1).

9. Ouvrage textile, fabriqué à l'aide d'un procédé selon l'une quelconque des revendications 1 à 6, qui est au moins par endroit en forme de tube ou de corps creux et qui est doté, au moins par endroits, de fils de renfort disposés selon un agencement au moins biaxial, lesdits fils de renfort étant disposés, d'une part, comme des fils de trame (9), au moins par endroits en forme de spirale dans le sens périphérique tangentiel et d'autre part, comme des fils de chaîne (7) dans le sens longitudinal (8) de l'ouvrage textile en forme de tube ou de corps creux (1.1) et qui sont fixés par au moins un système de fil de maille (20), au moins une zone de l'ouvrage textile en forme de tube ou de corps creux (1.1) avec des fils de renfort disposés selon un agencement au moins biaxial présentant une valeur constante pour le diamètre (10) le long du sens longitudinal ou une valeur variable pour le diamètre (10, 10.1, 10.2) en présence d'un nombre de mailles différent entre la circonférence de l'ouvrage textile en forme de tube ou de corps creux (1.1) et la zone de l'ouvrage textile en forme de tube ou de corps creux (1.1) contigüe à la zone de l'ouvrage textile (1) ne formant pas un tube ou un corps creux..

10. Ouvrage textile selon l'une quelconque des revendications 7 à 9, **caractérisé en ce que** l'ouvrage textile en forme de tube ou de corps creux (1.1) présente une valeur variable pour le diamètre (10, 10.1, 10.2) en présence d'un nombre de mailles différent sur le pourtour de l'ouvrage textile en forme de tube ou de corps creux, tandis que la densité des mailles est constante dans le sens tangentiel du pourtour.

11. Ouvrage textile selon l'une quelconque des revendications 7 à 10, **caractérisé en ce qu'**une couche interne de fil de renfort se trouvant sur la face interne de l'ouvrage textile en forme de tube ou de corps creux (1.1), est formée par des fils de chaîne orientés longitudinalement (8).

12. Ouvrage textile selon l'une quelconque des revendications 7 à 11, **caractérisé en ce qu'**une couche de fil de renfort interne est formée par les fils de trame (9).

13. Ouvrage textile selon l'une des revendications 7 à 12, **caractérisé en ce que** des zones de l'ouvrage textile (1) présentent un grand nombre de couches de fils de chaîne (7) et de fils de trame (9).

14. Ouvrage textile selon l'une des revendications 7 à 13, **caractérisé en ce que** des zones de l'ouvrage textile (1) présentent exclusivement des fils de maille (20).

15. Ouvrage textile selon l'une quelconque des revendications 7 à 14, **caractérisé en ce que** des ramifications de tricot se forment dans l'ouvrage textile en forme de tube et de corps creux (1.1), notamment des ramifications en Y ou en T, avec un renfort au moins biaxial.

16. Ouvrage textile selon l'une quelconque des revendications 7 à 15, **caractérisé en ce que** le fil de trame (9) courant dans le sens tangentiel de la circonférence est disposé en forme de méandre dans certaines sections (11), de sorte que l'agencement du fil de trame des sections (12) en forme de spirale et celui des sections (11) en forme de méandre se superposent.

17. Ouvrage textile selon l'une quelconque des revendications 7 à 16, **caractérisé en ce que** les zones en forme de tube ou de corps creux (1.1) sont contigües à des zones qui ne sont pas en forme de tube ou de corps creux, et forment des poches ou des rabats, permettant l'intégration d'éléments supplémentaires pendant ou après la fabrication de l'ouvrage textile (1), notamment pour la fixation ou la jonction avec d'autres composants ou pour la transmission de force dans les zones voisines qui ne sont pas en forme de tube ou de corps creux.

18. Utilisation d'ouvrages textiles selon l'une quelconque des revendications 7 à 17, en tant que produits semi-finis avec un renfort au moins biaxial et des fils de renfort sur le pourtour, dans le sens tangentiel, tous les fils de renfort s'étirant à l'intérieur de la structure.
